# EUROPEAN PATENT APPLICATION

(11) **EP 1 046 697 A2**
(43) Date of publication of application: **25.10.2000**
(21) Application number: 00107157.0
(22) Date of filing: 10.04.2000
(51) Int. Cl.: C10L 11/04, C10L 5/44

(54) **Device for carrying and burning charcoal**

(30) Priority: 23.04.1999 IT BO990050 U
(71) Applicant: RI.BE.S. S.r.l., 50132 Firenze (IT)
(72) Inventor: Bernabei, Gian Franco, 50129 Firenze (IT)
(74) Representative: Modiano, Guido, Dr.-Ing.

(57) **Abstract**

A device for carrying and burning charcoal comprising a container (1) made of paper-like combustible material and provided with a bottom (5) and a closure lid (4), the lid (4) having at least one region (6) which can be opened and said bottom having at least one region which can be opened and is closed by tabs (9, 10), the container containing, at least on one side, at least one paper bag (12, 13) filled with charcoal, a space for accommodating small pieces of wood (14) being formed between the at least one bag and the opposite side, the tabs (9, 10) being turnable over outwards so as to form elements for starting the lighting of the wood (14) inside the container.

## Description

The present invention relates to a device for carrying and burning charcoal.

It is known that the preparation of the cinders to be used for cooking food on a grill, for example in barbecues, is often difficult both because opening the conventional bags that contain the charcoal causes a considerable emission of coal dust, with the consequent problems for the users, and because lighting requires liquid combustible additives, besides the fact that the charcoal must often be poured first into an adapted stove so that it can be stoked from below and allow prompt lighting.

The aim of the present invention is to provide a device which allows a more comfortable way to transport charcoal and a quicker and safer lighting thereof.

Within the scope of this aim, an object of the present invention is to provide a device which can ensure greater cleanliness during transport and more efficient handling of storage operations.

Another object of the present invention is to provide a device which allows to use, simultaneously with charcoal, natural materials which are devoid of petroleum derivatives and are therefore more environment-friendly.

These and other objects which will become better apparent hereinafter, are achieved by a device for carrying and burning charcoal, characterized in that it comprises a container made of paper-like combustible material and provided with a bottom and a closure lid, said lid having at least one region which can be opened and said bottom having at least one region which can be opened and is closed by tabs, said container containing, at least on one side, at least one paper bag filled with charcoal, a space for accommodating small pieces of wood being defined between said at least one bag and the opposite side, said tabs being turnable over outwards so as to form elements for starting the lighting of the wood inside said container.

Further characteristics and advantages of the device according to the present invention will become better apparent from the following detailed description of a preferred embodiment thereof, illustrated only by way of non-limitative example in the accompanying drawing, wherein:

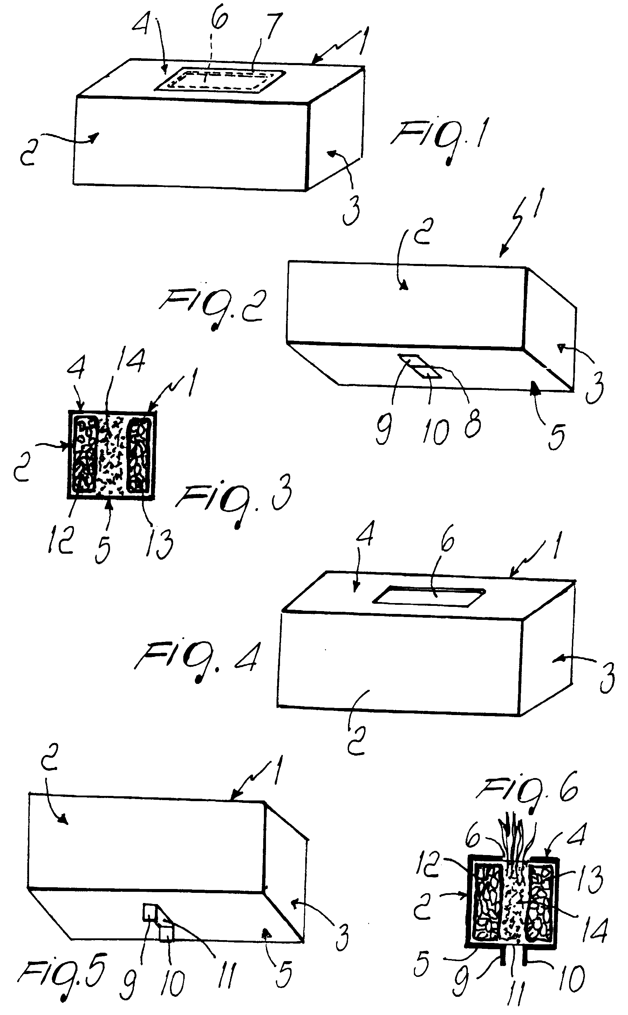

Figure 1 is a perspective elevation view of the device according to the invention in idle position;
Figure 2 is a bottom perspective view of the device of Figure 1;
Figure 3 is a sectional view of the device of Figures 1 and 2;
Figure 4 is a perspective elevation view of the device when ready for use;
Figure 5 is a bottom perspective view of the device of Figure 4;
Figure 6 is a sectional view of the device during use.

With reference to the above figures, the device comprises a container, generally designated by the reference numeral 1, made of paper-like combustible material which has a rectangular prismatic shape. The container is made, for example, of corrugated cardboard according to conventional methods.

In the drawing, the longitudinal lateral walls of the container are designated by the reference numeral 2, while the transverse lateral walls are designated by the reference numeral 3. The reference numerals 4 and 5 designate, respectively, the lid and the bottom of the container 1.

A longitudinally elongated opening 6 is formed centrally in the lid 4 and is closed by a label 7, for example of the self-adhesive type; once the label has been removed, it allows to free the opening 6 (see Figure 4).

Likewise, the bottom 5 has a substantially central region 8 formed by two tabs 9 and 10 which can be turned over and outwards in a downward direction so as to form an opening 11 which is connected to the internal compartment of the container 1.

Two bags 12 and 13 containing charcoal are arranged inside the container 1 and adjacent to the longitudinal lateral walls 2. The compartment between the two bags 12 and 13 is filled with pieces of wood 14 or other environment-friendly combustible material. Conveniently, the size of the wood fragments decreases from the bottom 5 toward the lid 4.

The device according to the present invention is used by placing the container 1 in the fireplace or barbecue, preferably in a raised position, for example on a pair of andirons or on a grill, so that there is space below the bottom.

Then, after removing the label 7 that closes the opening 6 and overturning outwards and downwards the tabs 9 and 10, the combustion of the wood 14 is started by igniting the wood directly through the opening 11 of the bottom or, indirectly, by igniting the tabs 9 and 10.

It is evident that the invention fully achieves the intended aim and objects. In particular, it is noted that combustion can spread very rapidly to all the wood fragments 14 arranged centrally between the bags 12 and 13 of charcoal, so that the flame exits through the upper opening 6. The spread of combustion is ensured by the draft effect produced between the lower opening 11 and the upper opening 6.

It should be noted that the central flame, by touching the opposite sides of the bags 12 and 13, ensures rapid ignition of the charcoal. Furthermore, the draft effect allows the flame to expand toward the walls 2 until the external container, by igniting, makes the charcoal drop onto the underlying surface of the fireplace or barbecue.

In a further embodiment, instead of the opening 6, the central region of the lid 4 is delimited by a fracture line, for example a line of perforations, which allows to tear off the central part and form the opening 6. In another embodiment, a plurality of draft openings 6 and 11 are provided in the lid 4 and/or in the bottom 5.

In still another embodiment, only one bag of charcoal is arranged adjacent to a wall 2 and the remaining space is occupied by the wood 14.

In the practical application of the invention, there can be more than one bag arranged on each side of the container.

The invention is susceptible of numerous modifications and variations, all of which are within the scope of the inventive concept. All the details may be replaced with technically equivalent elements.

The disclosures in Italian Utility Model Application No. BO99U000050 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A device for carrying and burning charcoal, characterized in that it comprises a container (1) made of paper-like combustible material and provided with a bottom (5) and a closure lid (4), said lid (4) having at least one region (6) which can be opened and said bottom having at least one region which can be opened and is closed by tabs (9, 10), said container containing, at least on one side, at least one paper bag (12, 13) filled with charcoal, a space for accommodating small pieces of wood (14) being defined between said at least one bag and the opposite side, said tabs (9, 10) being turnable over outwards so as to form elements for starting the lighting of the wood (14) inside said container.

2. The device according to claim 1, characterized in that said container contains at both sides thereof, at least two paper bags (12,13), one adjacent to each side.

3. The device according to claim 1, characterized in that said at least one opening (6) of the lid (4) is closed by a self-adhesive label (7) which is adapted to be torn in order to free said opening.

4. The device according to claim 1, characterized in that said at least one opening of said lid is defined by a longitudinally elongated region delimited by a perimetric fracture line which is removable to form an upper opening (6) of the lid.

5. The device according to claim 1, characterized in that said two tabs (9, 10), which are adapted to be turned over and outwards, form an opening (11) which is connected to the internal compartment of the container which accommodates said pieces of wood (14).
